# EUROPEAN PATENT APPLICATION

(11) **EP 1 073 238 A2**
(43) Date of publication of application: **31.01.2001**
(21) Application number: 00306464.9
(22) Date of filing: 28.07.2000
(51) Int. Cl.: H04L 12/58

(54) **Method and system for communicating messages embedded in an image**

(30) Priority: 29.07.1999 JP 21567799
(71) Applicant: Kinza.com Inc., Wilmington, Delaware 19801 (US)
(72) Inventor: Miyazawa, Takeo, Mitaka-shi, Tokyo 181-0013 (JP); Okada, Tetsuya, Suginami-ku, Tokyo 166-0004 (JP)
(74) Representative: Brown, Kenneth Richard

(57) **Abstract**

The present invention allows message exchange via an image. The existence of a message can be displayed on the image for an improved user interface. A symbol indicating a return message can be displayed on the image to allow easy understanding of the state of response to a certain message. A message sender designates a location on the image and writes a message. A symbol indicating the existence of a message is displayed on the designated location on the image. The message receiver moves the pointer in the vicinity of said symbol and performs predetermined operation to receive said message and reads said message. The message receiver can also send a return message.

## Description

### Background of the Invention

### Field of the Invention

The present invention relates to a method and system for communicating messages by utilizing images, and particularly to a method and system for designating the destination of messages on an image.

### Description of the Related Art

Electronic mail (e-mail) is widely used to exchange messages via computer networks and telecommunication networks.

Conventional e-mails were principally transmitted by designating the destination address, and therefore were suited to communication between individuals. Broadcast addresses were also possible, allowing communication between an individual and a group. In this case, advance input or registration of the destination address before transmission was necessary. In both cases, the addressee was basically designated by inputting characters.

However, it would be convenient if a plurality of people could exchange messages while looking at a common image during their observation and discussion of the image, for example. As the conventional way of designating the addressee is based on the input of characters, message exchange could not be directly linked with images. According to conventional e-mails, if a person wrote a message relating to a certain section of an image and desired to request the opinion of other people looking at the same image, the person had to transmit the message to all other people, and the people receiving the message had to read it, determine as to which section of the image the message relates, and transmit a return message if the section was of interest to the receiving person, or disregard the message. This procedure required transmission of messages to people who may not be interested, and the receiving side had to check each and every mail received. Also, if the image itself was attached to the e-mail, an image file with large data volume had to be transmitted to everyone, regardless of whether necessary or not.

In this way, conventional e-mails placed a large burden on both the transmitting and receiving sides.

### Summary of the Invention

It is an object of the present invention to solve the problems above, and allow message exchange via images.

Another object is to allow indication of the destination on an image for an improved user interface.

A further object is to allow indication of a return message symbol on an image for easy understanding of the state of responses to a certain message.

Another object is to allow designation of the reachability range of messages on an image.

A yet another object is to allow designation of the reachability range of return messages on an image.

In order to achieve such objects, the present invention is message transmission method utilizing images, comprising the steps of:
a message sender writing a message by designating a location on an image;
displaying a symbol indicating the existence of the message at said designated location on the image;
a message receiver moving a pointer in the vicinity of said symbol and performing predetermined operation for receiving said message; and
reading said message.

The present invention is also a message communication method utilizing images, wherein a return message to a received message is transmitted, comprising the steps of:
a message receiver preparing a return message;
moving a pointer in the vicinity of the symbol of a message on an image and performing predetermined operation for sending a return message to said message; and
indicating a return message symbol in the vicinity of said symbol and linking said return message to said return message symbol.

Furthermore, the present invention is a storage medium storing a program for causing a computer to implement the steps of:
a message sender writing a message by designating a location on an image;
displaying a symbol indicating the existence of a message at said designated location on the image;
a message receiver moving a pointer in the vicinity of said symbol and performing predetermined operation for receiving said message; and
reading said message.

The present invention is also a storage medium storing a program for causing a computer to implement a method of transmitting a return message to a received message, the method comprising the steps of:
a message receiver preparing a return message;
moving a pointer in the vicinity of the symbol of a message on the image and performing predetermined operation for transmitting a return message to said message; and
displaying a return symbol in the vicinity of said symbol and linking said return message to said return message symbol.

Moreover, the present invention is a message communication system utilizing images, comprising:
a transmission computer for receiving information on a message and on the designation of a location on an image for writing said message, and transmitting both information;
a server computer comprising an image memory and a message memory linked with said image memory, wherein the received message is stored in said message memory based on the received information designating a location on an image, and wherein a symbol indicating the existence of a message is displayed on said designated location on the image;
a message receiver for acquiring an image including said symbol from said server computer and receiving a message related to said symbol; and
a return message transmitter for preparing a return message, preparing a return message symbol indicating the existence of a return message on a predetermined location on the image, and transmitting said return message and said return message symbol to said server computer with said return message symbol linked with said return message.

The medium may be, for example, a floppy disc, hard disc, magnetic tape, magneto-optic disc, CD-ROM, DVD, ROM cartridge, RAM memory cartridge with battery backup, flash memory cartridge, or non-volatile RAM cartridge.

Also included are communications media such as telephone lines and other cable communications media, and microwave circuits and other wireless communications media. The Internet is included in the communications media.

A medium is defined as any kind of physical means for storing information (mainly digital data, programs), used for causing computers, dedicated processors and other processing apparatuses to perform certain functions. In other words, this may be any means for downloading programs onto a computer and for causing the computer to implement certain functions.

### Brief Description of the Drawings

Fig. 1 is an explanatory view of the operation of an embodiment of the present invention;
Fig. 2 shows an embodiment of the present invention as applied to the Internet;
Fig. 3A is a view showing the relation between an image memory and a message memory according to an embodiment of the present invention;
Fig. 3B is a view showing the physical image between an image memory and a message memory according to an embodiment of the present invention;
Fig. 4 is a flowchart of the message writing process according to an embodiment of the present invention;
Fig. 5 is a flowchart of the message reading process according to an embodiment of the present invention;
Fig. 6 is an explanatory view of the message reading according to an embodiment of the present invention;
Fig. 7 is an explanatory view of the designation of the range of message reception and return transmission according to an embodiment of the present invention;
Fig. 8 is an overall structural view of the system according to an embodiment of the present invention;
Fig. 9 is an explanatory view of the overall processing of the system according to an embodiment of the present invention;
Fig. 10 is a flowchart of the client processing in the system according to an embodiment of the present invention;
Fig. 11 is a flowchart of the server processing in the system according to an embodiment of the present invention; and
Fig. 12 is a flowchart of the processing of another client in the system according to an embodiment of the present invention.

### Description of the Preferred Embodiments

Now, the system/method according to an embodiment of the present invention will be described by reference to the drawings.

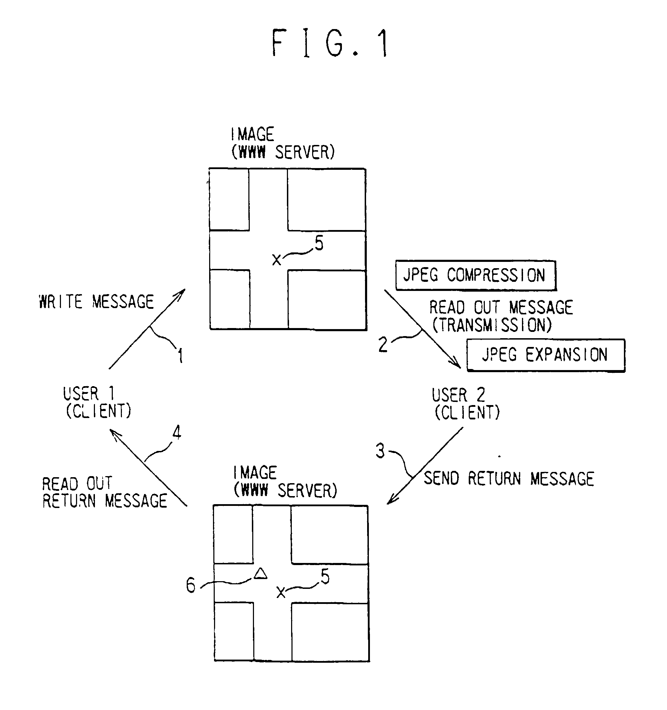

Fig. 1 is an overall view of an embodiment of the present invention. When a certain user 1 writes a message onto a certain image (reference numeral 1 in Fig. 1), a symbol 5 is shown that indicates that a message has been written onto the image and the location. Actually, the message and symbol are written onto a WWW server, for example. The written message desirably relates to its location. Thereby, another user 2 can instantaneously understand that a message exists and that the message relates to the location of symbol 5. User 2 can roughly anticipate the contents of the message based on the location of symbol 5, so if user 2 is interested, he/she will read the message, and if not, the message can be disregarded.

The WWW server may transmit the image compressed in JPEG format. The client will then perform JPEG expansion (reference numeral 2 in Fig. 1).

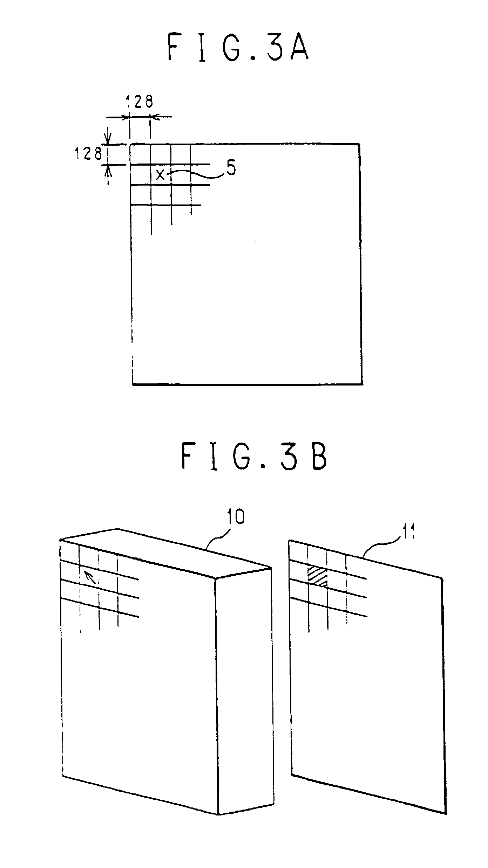

Assuming that user 2 has read the message and desires to transmit a return message. User 2 will prepare the return message and move the pointer in the vicinity of symbol 5 by operating the mouse and press the return button. Then, a return message symbol 6 will be shown in the vicinity of symbol 5 (reference numeral 3 in Fig. 3). Thereby, user 1 and other users can immediately understand that a return message to symbol 5 exists. In order to read the return message, user 1 will move the pointer in the vicinity of symbol 6 (reference numeral 4 in Fig. 1). Alternatively, the pointer may also be moved to the vicinity of symbol 5 to read the return message. This is because return message symbol 6 is linked to symbol 5.

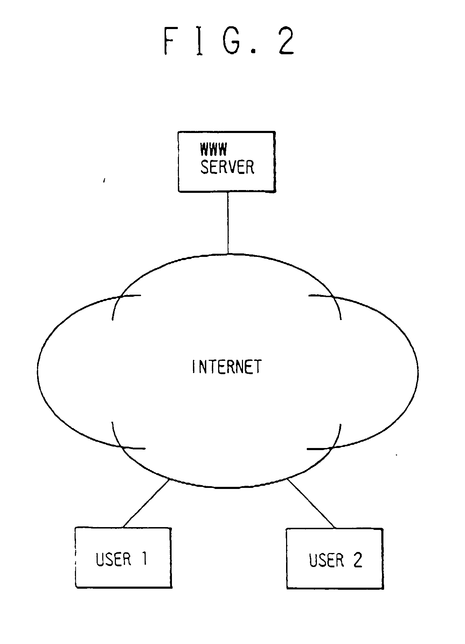

One system for performing the processing in Fig. 1 may be a common client/server system. For example, as shown in Fig. 2, the image is on a WWW server, and the client is a personal computer connected to the Internet. Image data including HTML format text is downloaded from the server to the client. Then, a message is read and/or written based on the image on the client computer, and the results are transmitted to the server, thereby realizing the system in Fig. 1. Furthermore, the image itself may be shared on the WWW server or supplied via a storage medium such as a CD-ROM or DVD that has been handed out in advance. Of course, the embodiment according to the present invention may also be realized through communications means other than the Internet.

A concrete example of linking a message to an image is shown in Fig. 3. As shown in Fig. 3A, the image may be partitioned in predetermined areas (e.g., 128 dots by 128 dots). Messages are stored for each of these areas. The physical image is shown in Fig. 3B. There are an image memory 10 and a message memory 11 corresponding to said predetermined areas of image memory 10. If any symbols 5 or 6 exist in any of said areas of the image memory, they are indicated in superposition with the image of image memory 10. By moving the pointer with the mouse to near an area containing a symbol and performing certain operations such as clicking the mouse, the corresponding message can be read from message memory 11.

According to the present embodiment, message exchange via an image is possible. Therefore, a plurality of users discussing a common image can exchange messages without requiring complicated operations.

It is also possible to indicate the destination on the image, thereby improving the user interface. An indication of the return message symbol on the image may also allow easy comprehension of the state of responses to a certain message.

Reception and/or return transmission of messages is also possible within a certain area defined on the image, or a range designated by a given center and a given radius. This allows users to read all messages in the desired range at once, or responding to all users at once who have written messages in the desired range. In other words, the range of messages to be read, and the addressees to which a return message is to be sent can be set through a simple operation compared to conventional e-mails. This will be described in detail later.

Furthermore, symbols 5 and 6 in the above example only showed the existence of a message and the location, but the symbol may be altered depending on different users, a name may be displayed, and other information such as the time and place may be shown, too.

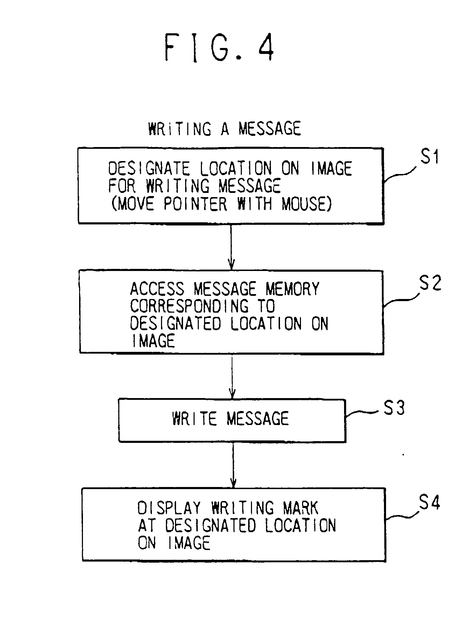

Now, an outline of the message writing processing procedure will be described by reference to Fig. 4.

First, the location on the image is designated where the message is to be written. Specifically, the pointer is moved to a certain location by the mouse (S1).

By performing a predetermined operation such as pressing a "message write button," the user can access the message memory corresponding to the designated location on the image (S2). As shown in Fig. 3, the user accesses message memory 11 corresponding to the area of image memory 10 where the pointer is located.

The user then prepares a certain message and writes it into message memory 11 (S3).

A writing mark (symbol) 5 is displayed on the designated image location (S4).

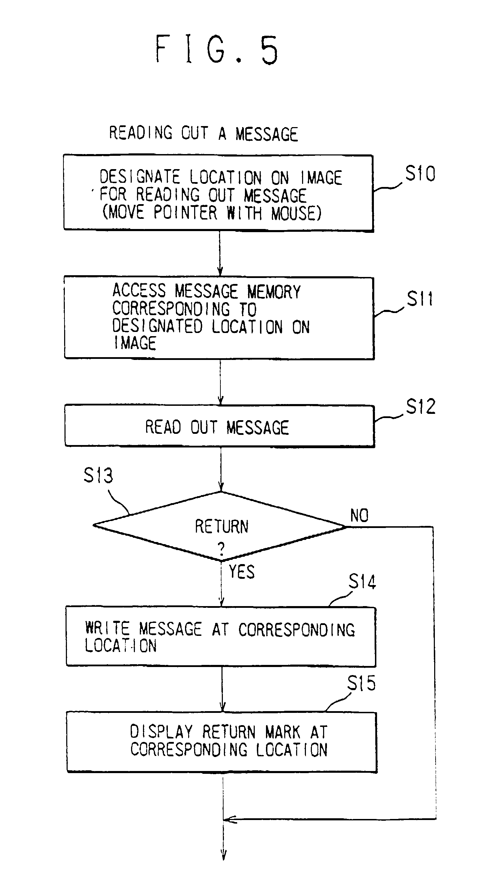

Now, an outline of the message reading processing procedure will be described by reference to Fig. 5.

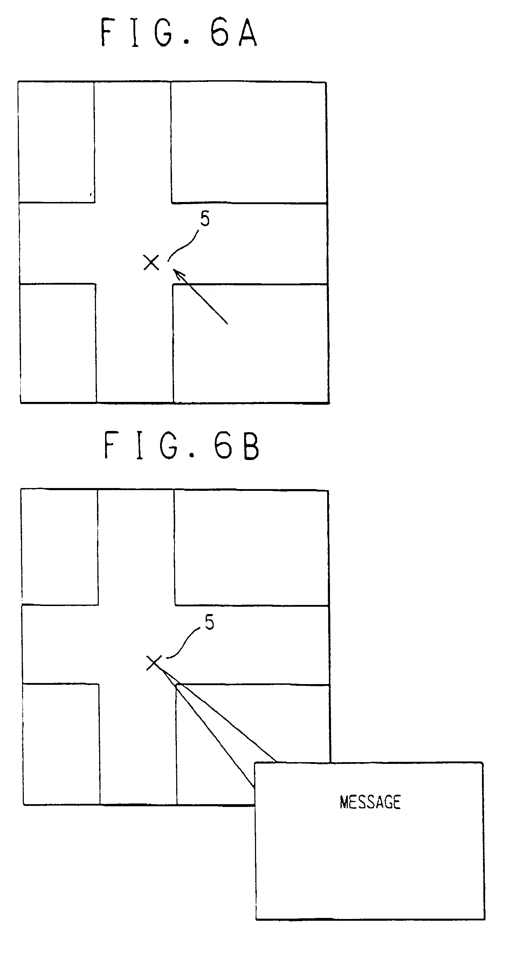

First, the location on the image is designated where the message is to be read out. Specifically, the pointer is moved to a certain location by the mouse (S10, Fig. 6A).

By performing a predetermined operation such as pressing a "message read-out button," the user can access message memory 11 corresponding to the designated location on the image (S11).

The user then reads the message from message memory 11 (S12, Fig. 6B).

If the user does not desire to write a return message (NO), the process ends.

If the user desires to write a return message (YES), then the user writes a message at the location of the pointer for example by pressing a "return message button" (S14).

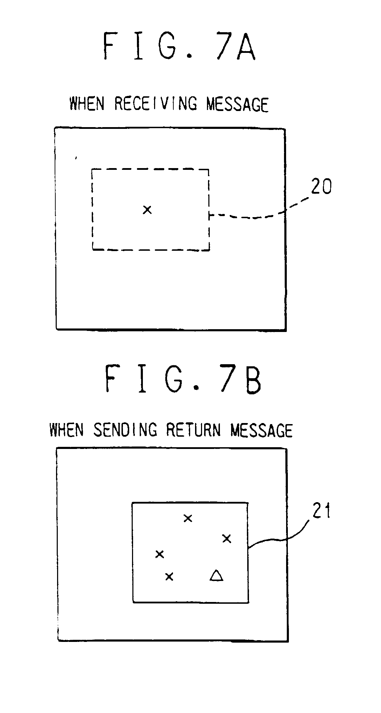

A return message mark is displayed on the location (S15). For example, the mark may be shown in the vicinity of the message as in Fig. 7B. Each user can immediately see whether there is a return message to a certain message, and whether there are many of them or few. If there are many responses to a certain message, the return message symbols increase one by one. The reaction to a certain message can be observed thereby.

Exchange of messages via an image can be performed simply through the procedure described above.

It is a feature of the present embodiment of the invention to designate the designation of a message via an image. By utilizing images, visually simple message exchange as described above is possible, allowing novel designation of the address (addressing).

For example, when writing a message, the reachability range can be designated. This may be performed by setting the system so that a message is received when the cursor enters the range defined by the symbol where the message is written as the center and a radius r. The larger radius r, the wider the reachability range. Alternatively, the range may be defined as a shape 20 including the symbol, such as a rectangle (Fig. 7A). In this case, the larger the area, the wider the reachability range. In this way, the user has control over the reachability range. If a message is important, the reachability may be set to a long distance, and if less important, to a short distance. This type of control is effective where a large number of messages exist. If the user reads out messages by moving the pointer between many messages, the user can read only selected important ones.

The destination can be set similarly for sending return messages. Here, the area may be an arbitrary shape 21 including the user writing the message and also any other plurality of users writing other messages (Fig. 7B). By surrounding the symbol with a predetermined shape 21 in this way, it is possible to return messages to all users within this area. This return transmission method is exceedingly flexible and easy to understand compared to broadcast return messages of conventional e-mail. Furthermore, the return transmission method according to the present embodiment may be combined with the reachability range setting described above. The destination of the return message may also be selected by individually clicking on the symbols.

Next, an application of the embodiment of the present invention will be described. The present embodiment may be used in cases where a plurality of persons discusses the state of progress or necessity of maintenance at construction sites or looking at the photograph of a structure. By building the present embodiment on the Internet, a plurality of specialists will be able to access the server from their respective offices and make discussions while viewing the photograph. For example, if an anomaly is detected during the inspection of the inner wall of a train tunnel, the photograph and data of such portion can be placed on the server to request the opinion of experts in an easy way.

The present embodiment may also be used as means for communication between persons carrying a mobile unit such as a cellular phone. A user carrying a mobile unit can access the server and write the current location of the user and a message such as "we will hold an event at two o'clock. We will be looking forward to your attendance." Then, a symbol indicating an event will be displayed at such location. Another user accessing the server to search the map for any event will find a symbol indicating an event near his current location or near some place he is going to, and read out the message according to the method of the present embodiment of the invention. Then, if such other user desires to participate, he/she will send a return message to such message. The user writing the message will send detailed information to the user sending the return message. According to this system, the person holding the event can easily know the reaction to his message in real time, and at the same time, the participant in the event can acquire necessary information in real time. For example, if the participant loses his way to the place of the event, the event holder can adequately guide the user.

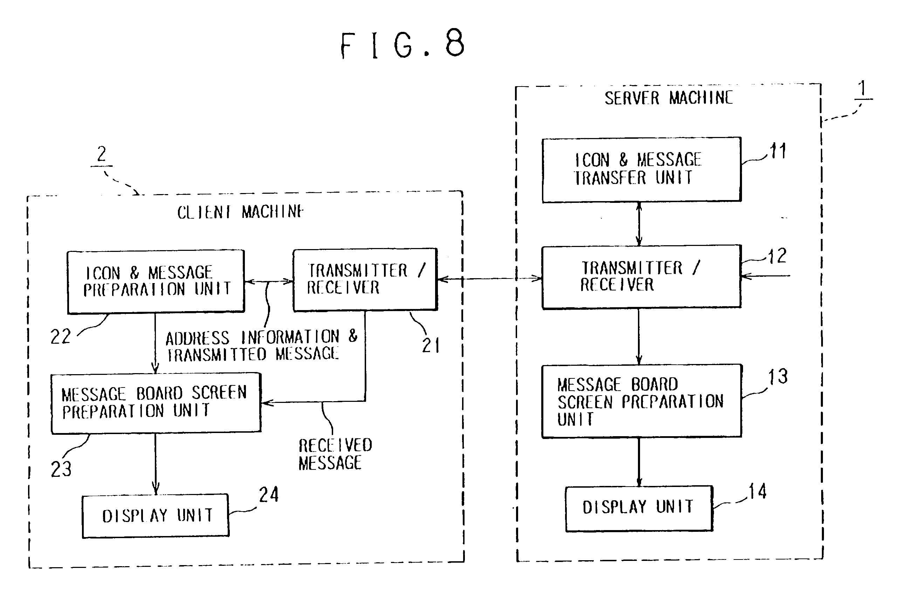

Fig. 8 is a functional block view of the structure of a server machine 1 and a client machine 2 used for the present system in outline. Server machine 1 comprises message transfer unit 11 for transferring the received message as necessary, a transmitter/receiver 12 for communicating with the client machine, message board screen preparation unit 13 for preparing the message board screen based on the received message, and a display unit 14 for receiving the output from screen preparation unit 13 and displaying the screen. Client machine 2 comprises transmitter/receiver 21 for communicating with the server machine, a message preparation unit 22 for preparing a message for transmission, a message board screen preparation unit 23 for receiving the message for transmission from message preparation unit 23, receiving the received message from transmitter/receiver 21, and displaying these messages on the message board, and a display unit 24 for receiving the output from screen preparation unit 23 and displaying the screen. The message board may display, for example, the screens in Figs. 6 and 7.

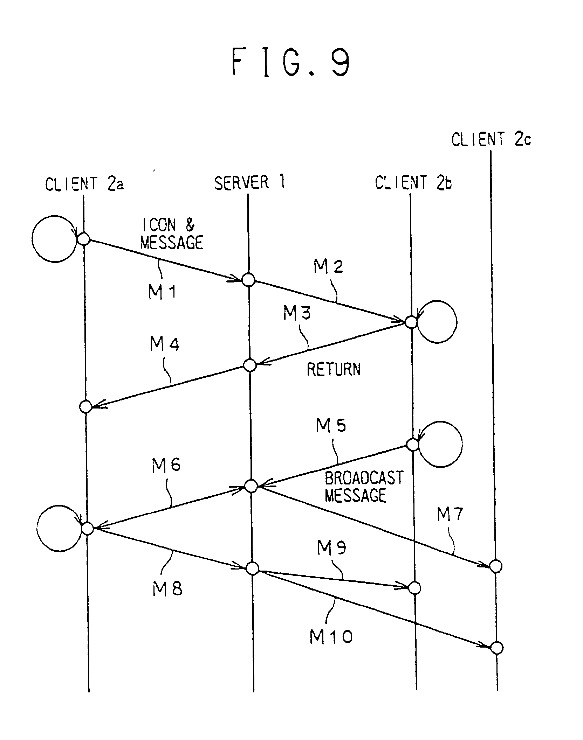

Fig. 9 shows an outline of the message exchange between server 1 and clients 2a, 2b and 2c. When client 2a prepares a message, this message M1 is transmitted to server 1 and at the same time displayed on the client's own screen. Server 1 identifies the destination of the received message M1 and sends it to the corresponding client 2b (M2). When client 2b prepares the return message, the return message is sent to client 2a (M3, M4). When the message is a broadcast message, message M5 sent from server 1 is sent to all other clients 2a and 2c (M6, M7). Similarly, the return message M8 from client 2a is sent to all clients 2b and 2c (M9, M10). In this way, message communication between all clients 2a, 2b and 2c is possible via server 1.

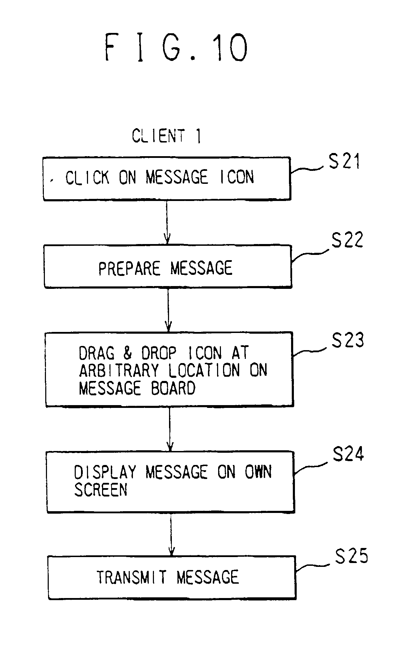

Fig. 10 shows the flow of processing at the side of the client transmitting the message. First, when a user clicks on the message icon (S21), the message preparation dialogue is displayed. Here, the user can prepare an arbitrary message (S22). The user then drags and drops the icon to an arbitrary location on the message board (S23). The message is transmitted through this operation. The client displays the message on his/her own screen (S24) and at the same time transmits the message (S25).

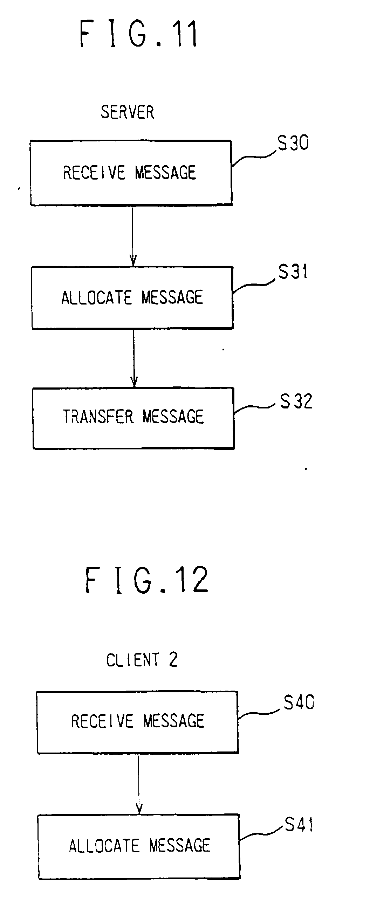

Fig. 11 shows the flow of the processing by the server. When the server receives a message (S30), it allocates the message (S31) and stores it in its own memory. Thereafter, the message is transferred to the predetermined destination (S32).

Fig. 12 shows the flow of processing at the side of the client receiving the message. When the client receives a message from the server (S40), it allocates the message (S41) and displays it on its own message board.

The present invention is not limited to the embodiments above and includes various alterations within the scope defined in the claims, which are included in the scope of the present invention.

Furthermore, means as referred to herein do not always mean physical means but include cases where the functions of each means are realized through software. Furthermore, the functions of one means may be realized through two or more physical means, or the functions of two or more means may be realized through one physical means.

## Claims

1. A message communication method utilizing images, comprising the steps of:
a message sender writing a message by designating a location on an image;
displaying a symbol indicating the existence of the message at said designated location on the image;
a message receiver moving a pointer in the vicinity of said symbol and performing predetermined operation for receiving said message; and
reading said message.

2. A message communication method utilizing images according to claim 1, wherein:
said step of said message sender writing a message includes a step of said message sender designating a range within which said message is receivable;
said step of said message receiver reading said message includes a step of determining whether said pointer is within said receivability range; and
said message can be received when said pointer is within said receivability range.

3. A message communication method utilizing images according to claim 2, wherein:
at said step of designating said receivability range, a radius r is designated; and
at said step of determining said receivability range, it is determined whether said pointer of the message receiver is within the range defined by said radius r with said symbol as the center.

4. A message communication method utilizing images according to claim 2, wherein:
at said step of designating said receivability range, a rectangular area including said symbol of the message sender is designated; and
at said step of determining said receivability range, it is determined whether said pointer of the message receiver is within said rectangular area.

5. A message communication method utilizing images according to claim 2, wherein said receivability range is set corresponding to the degree of importance of the message, and the more important the message, the wider the range.

6. A message communication method utilizing images according to claim 1, wherein:
at said message writing step, said message is written into the image of a map, and said message relates to the contents, time and place of an event; and
at said symbol displaying step, said symbol is displayed on said map at the place where said event is to be held.

7. A message communication method utilizing images, wherein a return message to a received message is transmitted, comprising the steps of:
a message receiver preparing a return message;
moving a pointer in the vicinity of the symbol of the received message on an image and performing predetermined operation for transmitting the return message to said received message; and
indicating the return message symbol in the vicinity of said symbol and linking said return message to said return message symbol.

8. A message communication method utilizing images according to claim 7, further comprising the steps of:
designating a range specifying the destination of the return message on the image; and
transmitting said return message to the symbol included in said range.

9. A message communication method utilizing images according to claim 8, wherein:
at said step of designating the return message destination range, a radius r is designated; and
at said step of transmitting the return message, said return message is transmitted to the symbol existing within the range defined by said radius r with the pointer as the center.

10. A message communication method utilizing images according to claim 8, wherein:
at said step of designating said return message destination range, a rectangular area is designated; and
at said step of transmitting the return message, said return message is sent to the symbol existing within said rectangular area.

11. A message communication method utilizing images according to claim 7, further comprising the steps of:
clicking on a symbol to which said return message is to be sent; and
transmitting said return message to the clicked symbol.

12. A message communication method utilizing images according to claim 7, wherein said return message symbol is displayed on the screen in real time and said message sender can immediately understand the reaction to the own message.

13. A message communication method utilizing images according to claim 12, wherein said return message symbol is a notification of participation in an event, said method further comprising the steps of:
said message sender notifying a permission to participate to said message receiver; and
said message sender transmitting information on the way to the place of said event to said message receiver.

14. A storage medium storing a program for causing a computer to implement the steps of:
a message sender writing a message by designating a location on an image;
displaying a symbol indicating the existence of the message at said designated location on the image;
a message receiver moving a pointer in the vicinity of said symbol and performing predetermined operation for receiving said message; and
reading said message.

15. A storage medium storing a program for causing a computer to implement a method of transmitting a return message to a received message, the method comprising the steps of:
a message receiver preparing a return message;
moving a pointer in the vicinity of the symbol of a received message on the image and performing predetermined operation for transmitting the return message to said message; and
displaying a return symbol in the vicinity of said symbol and linking said return message to said return message symbol.

16. A message communication system utilizing images, comprising:
a transmission computer for receiving information on a message and on the designation of a location on an image for writing said message, and transmitting both information;
a server computer comprising an image memory and a message memory linked with said image memory, wherein the received message is stored in said message memory based on the received information designating a location on an image, and wherein a symbol indicating the existence of a message is displayed on said designated location on the image;
a message receiver for acquiring an image including said symbol from said server computer and receiving a message related to said symbol; and
a return message transmitter for preparing a return message, preparing a return message symbol indicating the existence of a return message on a predetermined location on the image, and transmitting said return message and said return message symbol to said server computer with said return message symbol linked with said return message.

17. A program comprising computer-readable code for causing a computer to implement the steps of:
a message sender writing a message by designating a location on an image;
displaying a symbol indicating the existence of the message at said designated location on the image;
a message receiver moving a pointer in the vicinity of said symbol and performing predetermined operation for receiving said message; and
reading said message.

18. A program comprising computer-readable code for causing a computer to implement a method of transmitting a return message to a received message, the method comprising the steps of:
a message receiver preparing a return message;
moving a pointer in the vicinity of the symbol of a received message on the image and performing predetermined operation for transmitting the return message to said message; and
displaying a return symbol in the vicinity of said symbol and linking said return message to said return message symbol.
